# EUROPÄISCHE PATENTANMELDUNG

(11) **EP 0 599 212 A1**
(43) Veröffentlichungstag der Anmeldung: **01.06.1994**
(21) Anmeldenummer: 93118641.5
(22) Anmeldetag: 19.11.1993
(51) Int. Cl.: G02B 6/30, G02B 6/42

(54) **Anordnung zur Ankopplung eines Lichtwellenleiters an ein lichtaussendendes oder -empfangendes Element**

(30) Priorität: 24.04.1993 DE 4313493; 25.11.1992 DE 9217928 U
(71) Anmelder: ROBERT BOSCH GMBH, 70442 Stuttgart (DE)
(72) Erfinder: Schwaderer, Bernhard, Dr.-Ing., D-71554 Weissach i.T. (DE); Hauer, Heiner, Dipl.-Ing., D-70734 Fellbach (DE); Kuke, Albrecht, Dr. rer. nat., D-71549 Auenwald (DE)

(57) **Zusammenfassung**

Es wird eine Anordnung angegeben, mit der ein Lichtwellenleiter (65) an ein Sende - oder Empfangselement (34) ankoppelbar ist. Der Lichtwellenleiter (65) befindet sich auf einem ersten Träger (1'), das Sende - oder Empfangselement (34) auf einem zweiten Träger (1). Die Träger (1,1') liegen mit ihren Grundflächen aufeinander, wobei anisotrop geätzte Strukturen (41,41') mit Hilfselementen (40) zur automatischen Justage vorgesehen sind. Ein Lichtbündel (11) kreuzt die Grundflächen, und wird an einer Reflexionsfläche (22) im Träger (1') reflektiert.

## Beschreibung

Die Erfindung betrifft eine Anordnung zur Ankopplung eines Lichtwellenleiters an mindestens ein lichtaussendendes oder empfangendes Element über wenigstens einen lichtdurchlässigen Träger und eine Reflexionsfläche, die sich an einem Träger befindet, wobei sich ein zweiter lichtdurchlässiger Träger auf dem ersten Träger befindet, indem sich eine Grundfläche eines Trägers benachbart zu einer Grundfläche des anderen Trägers befindet.

Bei der Ankopplung eines Lichtwellenleiters an ein optisches Sende- oder Empfangselement ist eine genaue Justierung sehr wichtig. Aus der DE 39 14 835 C1 ist es bekannt, den Lichtwellenleiter und das optische Sende- bzw Empfangselement auf verschiedenen Trägern zu fixieren, die mit ihren Trägeroberflächen verschiebbar aufeinanderliegen. Das Lichtbündel zwischen dem Lichtwellenleiter einerseits und dem Sende- bzw. Empfangselement andererseits gelangt durch zweimalige Spiegelung an je einer auf den Trägern befindlichen Spiegelebene vom Lichtwellenleiter zum optisch aktiven Element oder umgekehrt. Durch Verschieben der Träger gegeneinander wird eine laterale Justierung des Lichtbündels gegenüber dem Lichtwellenleiter bzw. optisch aktiven Element erreicht.

In der deutschen Patentanmeldung P 42 39 534 ist vorgeschlagen, einen einteiligen Träger aus einkristallinem Silizium zu verwenden, auf dessen Unterseite ein Lichtwellenleiterende in einer Nut fixiert ist und auf dessen Oberseite mindestens ein Empfangselement vorgesehen ist, dessen lichtempfindliche Fläche der Unterseite zugewandt ist. Das Licht wird vom Lichtwellenleiter in den Träger eingekoppelt an einer totalreflektierenden Reflexionsfläche reflektiert und gelangt durch den Träger hindurch zum Empfangselement. Eine zusätzliche Strahlbündelung ist aufgrund des einteiligen Trägers nicht ohne weiteres möglich.

In der deutschen Patentanmeldung P 43 01 456 wird eine Anordnung aus zwei verschiedenen Trägern vorgeschlagen, die mit ihren Trägeroberflächen verschiebbar aufeinanderliegen. Auf den den aufeinanderliegenden Trägeroberflächen gegenüberliegenden Seiten der Träger befindet sich der Lichtwellenleiter oder das Sende- bzw. Empfangselement. Als Lichtwellenleiter kann sowohl eine Faser als auch ein Streifenwellenleiter eingesetzt sein. In einer Reihe von Anwendungsfällen, stellt sich die genaue Justage durch Verschieben der Träger gegeneinander als ungünstig oder nicht notwendig heraus.

Es ist Aufgabe der Erfindung, eine Anordnung zur Ankopplung eines Lichtwellenleiters an mindestens ein optisches Sende- oder Empfangselement anzugeben, die mehrere Träger aufweist, die jedoch nicht mehr zueinander justiert werden müssen.

Die Aufgabe wird gelöst durch eine Anordnung mit den Merkmalen des Patentanspruches 1. Vorteilhafte Weiterbildungen sind in den Unteransprüche angegeben.

Mit der Erfindung wird eine Anordnung angegeben, mit der ein Halbleiterlaser-Chip an eine Lichtwellenleiter, vorzugsweise eine Single-Mode-Faser oder einen optischen Streifenleiter, angekoppelt werden kann. Dabei soll der Laser und der Wellenleiter jeweils auf verschiedenen Seiten eines als Substrat dienenden Silizium-Wafers angebracht sein und das Licht das Siliziumsubstrat, das im Infrarotlichtbereich durchlässig ist, durchdringen. Diese Anordnung bietet den Vorteil, daß der auf einer Substratoberfläche montierte Laser hermetisch dicht von dem Lichtwellenleiter getrennt ist und daher leicht hermetisch eingeschlossen werden kann, wobei das Substrat als Gehäuseboden dient. Die Strukturierung der erforderlichen Flächen zur Lichtumlenkung durch Spiegelung und Lichtbrechung wird auf hochgenaue Weise durch anisotrope Ätztechnik von Silizium erzeugt. Zur exakten Positionierung der verschiedenen Trägersubstrate zueinander wird ebenfalls die hochgenaue Strukturierung durch die anisotrope Ätztechnik verwendet. Hierfür werden verschiedene Möglichkeiten angegeben. Es ist möglich auf den zueinander zu fixierenden Trägern komplementäre Strukturen vorzusehen, beispielsweise in Form von Nuten und V-förmigen Erhebungen, wobei die hochgenau gearbeiteten Flanken zur Auflage der Träger aufeinander dienen. Es ist aber auch möglich pyramidenförmige Vertiefungen in beiden Trägern vorzusehen, in die dann hochgenau gearbeitete Kugeln eingelegt werden. Dasselbe kann natürlich auch mit V-Nuten und hochgenau gearbeiteten Zylindern erreicht werden.

Ausführungsbeispiele der Erfindung werden anhand der Zeichnungen erläutert. Es zeigen:
Figur 1 ein Ausführungsbeispiel mit einem kantenemittierenden Laser und eine Linse als Zwischenlage. Statt des Lasers 4 in Figur 1 kann auch ein lichtabstrahlender Streifenleiter oder ein Faserende in einer V-Nut als lichtaussendendes Element vorgesehen sein,
Figur 2 an den Trägern gemäß Figur 1 vorgesehene komplementäre anisotrop geätzter Strukturen und
Figur 3 die Ankopplung eines Streifenleiters über eine Linse an einen Laser, wobei die beiden Träger mittels Kugeln zueinander justiert sind.

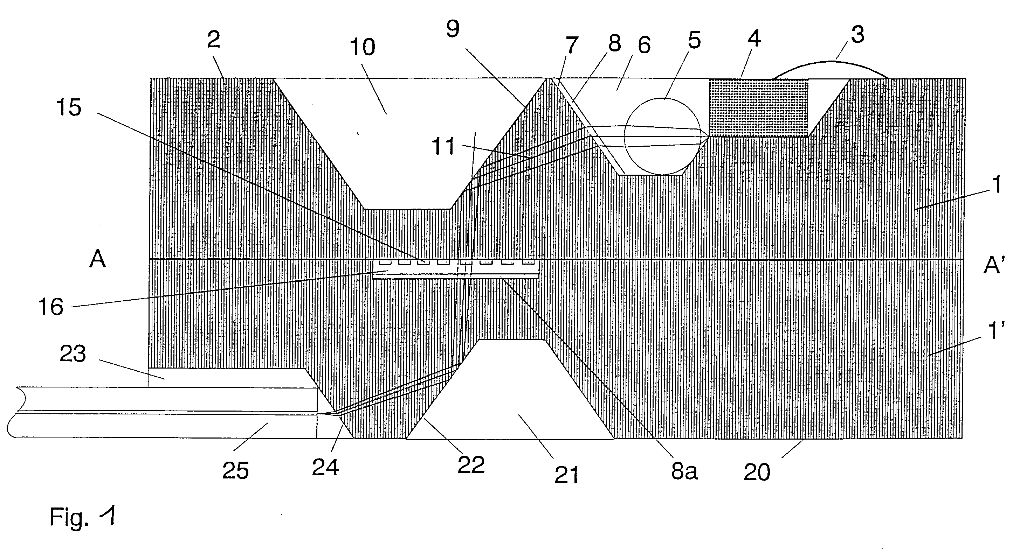

Figur 1 zeigt ein erstes Ausführungsbeispiel der erfindungsgemäßen Lösung. Ein Träger 1 aus vorzugsweise einkristallinem Silizium hat auf seiner Oberseite 2 anisotrop geätzte Vertiefungen zur Aufnahme einer kantenemittierenden Halbleiterlaserdiode 4 und einer Abbildungsoptik, vorzugsweise einer Kugellinse 5 in einer ebenfalls anisotrop geätzten Vertiefung. Diese Vertiefung 6 weist eine lichtbrechende Seitenwand 7 auf, die mit einer Antireflexionsbeschichtung 8 versehen ist. Eine lichtreflektierende Seitenwand 9 ist an einer weiteren anisotrop geätzten Vertiefung 10 vorgesehen. Das aus dem Laser 4 austretende Lichtbündel durchdringt nach Kollimierung bzw. Fokussierung durch die Linse 5, Brechung an der Fläche 7 und Reflexion an der Fläche 9 den Träger 1 nahezu senkrecht zu dessen ( - abgesehen von den Vertiefungen - ebenen) Oberseite 2. Der Winkel zwischen der Normalen auf der Oberseite 2 und der Strahlrichtung beträgt nur etwa 6,3 Grad.

Das Substrat ist entlang der Trennlinie A - A' in zwei Teilsubstrate 1 und 1' aufgeteilt.

Auf der Unterseite 20 des Teilsubstrates 1' ist ebenfalls durch anisotrope Ätztechnik eine Vertiefung 21 mit einer reflektierenden Seitenfläche 22 und eine V-Nut 23 mit einer lichtbrechenden Stirnfläche 24 erzeugt. Die V-Nut dient gleichzeitig zur Aufnahme einer Lichtleitfaser 25. Aus Symmetriegründen tritt das aus der Laserdiode 4 (mit seinem Zentralstrahl parallel zur Substratoberfläche 2) austretende Lichtbündel 11 auch wieder mit parallel zur Substratunterseite 20 verlaufendem Zentralstrahl in die Lichtleitfaser 25 ein.

Zwischen den Teilsubstraten 1 und 1' ist eine weitere Linse 15 eingesetzt. Diese Linse 15 ist als Fresnellinse ausgebildet und sitzt auf der Unterseite des Teilsubstrates 1. Die Oberseite der Teilsubstrates 1' hat an der entsprechenden Stelle eine Vertiefung 16, die ebenfalls durch anisotropes Ätzten oder ein anderes Verfahren hergestellt sein kann. Zur Verminderung der Reflexionsverluste an den Grenzflächen Luft-Silizium können Antireflexionsbeschichtungen 8, 8a aufgebracht sein.

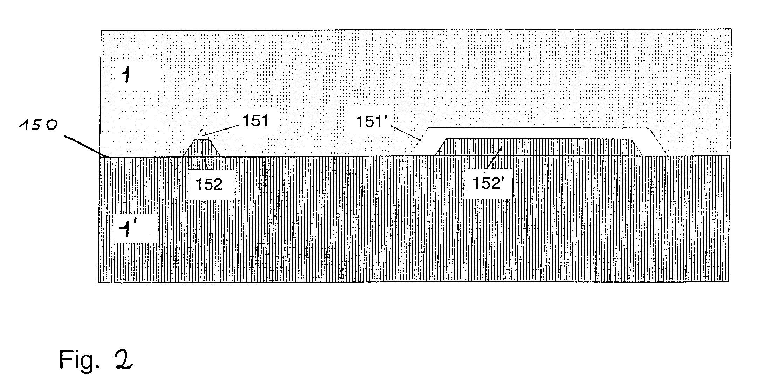

Statt des Lasers 4 kann auch ein lichtabstrahlender Streifenleiter oder ein Faserende in einer V-Nut als lichtaussendendes Element vorgesehen sein.
Eine Möglichkeit zur Positionierung der Teilsubstrate 1,1' ist in Figur 2 gezeigt. In das eine Substrat wird eine V-Nut 151 eingeätzt. Die Oberfläche des anderen Substrates wird ganzflächig bis auf einen Steg 152 abgeätzt. Dieser Steg hat an seinen Enden konvexe Ecken, die während des Ätzens angegriffen werden, so daß der Steg 152 in seiner Länge an jedem Ende um etwa die Ätztiefe kürzer wird. Die Positionierung läßt sich an einem Steg mit dazugehöriger V-Nut nur in der Richtung senkrecht zur Stegrichtung erreichen. Zur Festlegung der Positionierung in der Stegrichtung ist daher ein zweiter Steg 152' mit V-Nut 151' benötigt, deren Richtung senkrecht zur ersten Positionierstruktur 151 und 152 verläuft. Durch die komplementären Strukturen ist eine Positionierung möglich. Dabei sollten nur die Flächen der Strukturen als Auflageflächen dienen, um eine hohe Genauigkeit zu erreichen.

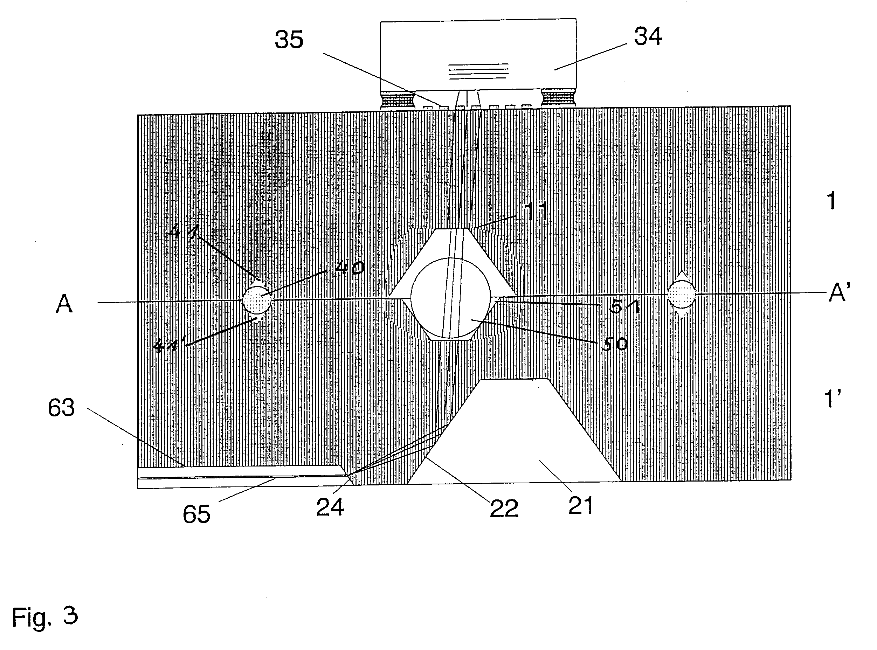

Figur 3 zeigt ein Ausführungsbeispiel, bei welchem nicht eine kantenemitterende Laserdiode sondern eine oberflächenemittierende Laserdiode 34 (SELD Surface Emitting Laser Diode) eingesetzt ist. Hier ist eine abbildende Linse unmittelbar vor dem Laser auf der Trägeroberfläche 2 als Fresnellinse 35 angebracht. Die Fresnellinse kann entweder durch Strukturierung des Siliziums selbst oder durch Aufbringen und Strukturieren einer besonderen Schicht hergestellt sein.

Statt des Lasers kann auch eine Empfangsdiode eingesetzt werden. Eine weitere Linse, beispielsweise eine Kugellinse 50 kann in einer anisotrop geätzten Vertiefung 51 zwischen den Teilsubstraten 1,1' eingesetzt werden.

Figur 3 zeigt ein Ausführungbeispiel, bei dem nicht in eine Faser sondern in einen Streifenwellenleiter 65 eingekoppelt ist, der beispielsweise aus Polyimid, Siliziumoxinitrid oder einem anderen gebräuchlichem Material bestehen kann und als vergrabener Wellenleiter, streifenbelasteter Wellenleiter, Rippenwellenleiter usw. ausgebildet sein kann. Die anisotrop geätzte, flache Vertiefung 63 für diesen Wellenleiter hat eine ebenso wie in den anderen Figuren geneigte Stirnfläche 24. Da aber im Fall der Figur 3 die Lichtbrechung nicht an der Grenzfläche Silizium-Luft, sondern an der Grenzfläche Silizium-Wellenleiter erfolgt, muß ein anderer Strahlwinkel des Bündels 11 vorgesehen werden. Dies läßt sich durch die Fresnellinse 35 erreichen.

Zur exakten Positionierung der verschiedenen Teilsubstrate zueinander läßt sich ebenfalls die hochgenaue Strukturierung durch die anisotrope Ätztechnik verwenden. Figur 3 zeigt ein Ausführungsbeispiel, bei welchem auf zwei zueinander zu justierenden Substraten und jeweils an korrespondierenden Stellen je eine pyramidenförmige Vertiefung 41 und 41' mit quadratischer Grundfläche anisotrop geätzt ist. In diese Vertiefungen wird eine Präzisionskugel 40 beispielsweise aus Glas oder Stahl eingelegt. Die Größe der beiden Vertiefungen wird beispielsweise so gewählt, daß die Kugel gerade die acht Seitenflächen der beiden Vertiefungen berührt, wenn die Substratoberfläche miteinander in Kontakt sind. Zur Positionierung zweier Substrate zueinander sind mindestens 2 solcher Positionierhilfen an möglichst weit voneinander entfernten Stellen erforderlich.

Eine Fresnellinse zwischen den Teilsubstraten kann auch zur Aufteilung des Lichtbündels in vorgegebene Richtungen dienen.

So können mehrere Sender oder Empfänger an einen Lichtwellenleiter angeschlossen werden. Eine wahlweise Ankopplung kann durch Dazwischenschaltung von Schaltern erreicht werden.

## Patentansprüche

1. Anordnung zur Ankopplung eines Lichtwellenleiters (25) an mindestens ein lichtaussendendes oder empfangendes Element (4) über wenigstens einen lichtdurchlässigen Träger (1) und eine Reflexionsfläche (22), die sich an einem Träger (1) befindet, wobei sich ein zweiter lichtdurchlässiger Träger (1') auf dem ersten Träger (1) befindet, indem sich eine Grundfläche eines Trägers (1) benachbart zu einer Grundfläche des anderen Trägers (1') befindet, gegebenenfalls unter Dazwischenschaltung einer lichtdurchlässigen Zwischenlage, gekennzeichnet durch folgende Merkmale:
a) auf der der Grundfläche gegenüberliegenden Kehrseite (2,20 eines Trägers (1,1') befindet sich der Lichtwellenleiter oder das lichtaussendende oder -empfangende Element (4),
b) der Verlauf des Lichtbündels (11) zwischen Lichtwellenleiter (25) und lichtaussendende bzw. -empfangende Element (4) kreuzt die Grundflächen,
c) auf den Grundflächen der beiden Träger (1,1) befinden sich komplementäre Strukturen (151,152) die durch anisotropes Ätzen derart hergestellt sind, daß lediglich ihre Flanken zur Auflage der Träger (1,1') aufeinander dienen oder auf den Grundflächen der beiden Träger (1,1') befinden sich anisotrop geätzte Strukturen (41,41') deren Flanken jeweils zur Auflage mindestens eines den beiden Trägern gemeinsamen Hilfselementes (40) dienen.

2. Anordnung zur Ankopplung eines Lichtwellenleiters (65) an mindestens ein lichtaussendendes bzw. -empfangendes Element (34) nach Anspruch 1, dadurch gekennzeichnet, daß sich auf den Grundflächen der beiden Träger (1,1') jeweils mindestens zwei anisotrop geätzte pyramidenförmige Vertiefungen (41,41') an sich entsprechenden Stellen befinden, und daß als Hilfselemente jeweils Kugeln (40) in entsprechende pyramidenförmige Vertiefungen (41,41') eingelegt sind.

3. Anordnung zur Ankopplung eines Lichtwellenleiters (65) an mindestens ein lichtaussendendes oder -empfangendes Element (34) nach Patentanspruch 1, dadurch gekennzeichnet, daß sich auf den Grundflächen der beiden Träger jeweils mindestens eine anisotrop geätzte Nut an sich entsprechenden Stellen befindet, und daß als Hilfselement ein Zylinder in entsprechende Nuten eingelegt ist.

4. Anordnung nach einem der Ansprüche 1 bis 3, dadurch gekennzeichnet, daß eine lichtdurchlässige Zwischenlage (50) vorgesehen ist, die sich zwischen den beiden Trägern (1,1') befindet und daß der Verlauf des Lichtbündels (11) zwischen Lichtwellenleiter (65) und lichtaussendendes oder -empfangendes Element (34) die Zwischenlage (50) kreuzt.

5. Anordnung nach Anspruch 4, dadurch gekennzeichnet, daß als Zwischenlage eine Linse, insbesondere eine Fresnellinse eingesetzt ist.

6. Anordnung nach einem der Ansprüche 4 oder 5, dadurch gekennzeichnet, daß mehrere lichtaussendende oder -empfangende Elemente nebeneinander auf ihrer Kehrseite eines Trägers angeordnet sind, daß das Lichtbündel zwischen Zwischenlage und in vorgewählte Richtungen aufgeteilt ist, so daß jedes Lichtbündel zwischen einem und dem Lichtwellenleiter verläuft.

7. Anordnung nach Anspruch 6, dadurch gekennzeichnet, daß im Verlauf mindestens eines Lichtbündels zwischen Zwischenlage und Sende- bzw. Empfangselement ein zwischen den Zuständen lichtdurchlässig/lichtundurchlässig schaltbares Element vorgesehen ist.

8. Anordnung nach einem der Ansprüche 1 bis 7, dadurch gekennzeichnet, daß die Reflexionsfläche (22) totalreflektierend ist.

9. Anordnung nach einem der Ansprüche 1 bis 8, dadurch gekennzeichnet, daß der Lichtwellenleiter ein Streifenleiter (65) ist.

10. Anordnung nach einem der Ansprüche 1 bis 9, dadurch gekennzeichnet, daß als lichtaussendende und/oder -empfangende Elemente optoelektronische Sende- bzw. Empfangselemente vorgesehen sind.

11. Anordnung nach einem der Ansprüche 1 bis 10, dadurch gekennzeichnet, daß als lichtaussendende und/oder empfangende Elemente Lichtwellenleiterenden vorgesehen sind.
